# EUROPEAN PATENT SPECIFICATION

(11) **EP 4 531 162 B1**
(45) Date of publication and mention of the grant of the patent: **20.05.2026**
(21) Application number: 24202190.5
(22) Date of filing: 24.09.2024
(51) Int. Cl.: H01M 10/42, H01M 50/242, H01M 50/249, H01M 50/262, H01M 50/284, H01M 50/293

(54) **BATTERY MODULE, BATTERY PACK, AND ELECTRICAL DEVICE**
BATTERIEMODUL, BATTERIEPACK UND ELEKTRISCHE VORRICHTUNG
MODULE DE BATTERIE, BLOC-BATTERIE ET DISPOSITIF ÉLECTRIQUE

(30) Priority: 28.09.2023 CN 202311277583
(43) Date of publication of application: 02.04.2025
(73) Proprietor: Xiamen Ampack Technology Limited, Xiamen City, Fujian Province, 361000 (CN)
(72) Inventor: WANG, Shenbo, Xiamen City, Fujian 361000 (CN); LI, Jian, Xiamen City, Fujian 361000 (CN)
(74) Representative: Icosa

(56) References cited:
- EP-A1- 4 152 484
- CN-B- 113 140 857

## Description

### TECHNICAL FIELD

This application relates to the technical field of batteries, and in particular, to a battery module, a battery pack, and an electrical device.

### BACKGROUND

A battery pack contains a circuit board and a cell assembly as described in EP 4 152 484 A1. If the internal structure of the battery pack is not mounted stably enough, the structural strength of the entire battery will be impaired.

### SUMMARY

Some embodiments of this application provide a battery module, a battery pack, and an electrical device to improve structural strength of the battery.

According to a first aspect, an embodiment of this application provides a battery module. The battery module includes a housing, a cell assembly, a bracket, and a first colloid. An accommodation space is formed in the housing. An opening is provided at one end of the accommodation space along a first direction. The housing includes a bottom wall. The bottom wall is disposed opposite to the opening. The cell assembly is disposed in the accommodation space. The bracket is disposed on one side of the cell assembly, the side being oriented away from the bottom wall, of the cell assembly along the first direction. A first space is provided between the bracket and the cell assembly. The first colloid is disposed in the first space. The first colloid connects the cell assembly and the bracket. The bracket is provided with a first fixing piece. The first fixing piece includes a first connecting portion and a first constraining portion. The first constraining portion is disposed in the first colloid. A first angle A is provided between the first connecting portion and the first constraining portion, satisfying: 0° < A < 180°.

In the above technical solution, the angle A between the first connecting portion and the first constraining portion of the first fixing piece satisfies 0° < A < 180°, so that the first constraining portion is bent relative to the first connecting portion. The first constraining portion is disposed in the first colloid, so that the bracket can be connected to the first colloid through the first fixing piece, thereby improving the connection stability of the bracket, and in turn, improving the structural strength of the battery module. When the angle A between the first connecting portion and the first constraining portion of the first fixing piece satisfies 0° < A < 180°, in contrast to the scenario in which the angle between the first constraining portion and the first connecting portion is 0° or 180°, this arrangement increases the contact area between the first constraining portion and the first colloid, and further improves the stability of the bracket. The first constraining portion is bent relative to the first connecting portion, thereby providing a deformation space for the expansion of the cell assembly in the first direction, and reducing the risk of squeezing the first fixing piece when the battery cell expands.

In some embodiments in the first aspect of this application, the first angle is an obtuse angle, and the first angle is facing away from the cell assembly.

In the above technical solution, the first angle is an obtuse angle, thereby making it convenient for the first fixing piece to deform in the first direction, more easily providing a deformation space for the expansion of the cell assembly in the first direction, and reducing the risk that the cell assembly squeezes the first fixing piece when expanding.

In some embodiments in the first aspect of this application, the angle A satisfies: 135° ≤ A ≤ 160°.

In the above technical solution, 135° ≤ A ≤ 160°. Therefore, a larger connection area exists between the first fixing piece and the first colloid, thereby improving the connection stability of the bracket, making it convenient for the first fixing piece to deform in the first direction, more easily providing a deformation space for the expansion of the cell assembly in the first direction, and reducing the risk that the cell assembly squeezes the first fixing piece when expanding.

In some embodiments in the first aspect of this application, at least a part of the first connecting portion is disposed in the first colloid.

In the above technical solution, at least a part of the first connecting portion is disposed in the first colloid. Therefore, at least a part of the first constraining portion and at least a part of the first connecting portion are both disposed in the first colloid, thereby further increasing the connection area of the first fixing piece, and further improving the connection stability of the bracket.

In some embodiments in the first aspect of this application, the bracket includes a base portion and an extension portion. The extension portion extends from the base portion toward the cell assembly. The extension portion includes a first part and two notches. The first part is located between the two notches. The first connecting portion is connected to the first part.

In the above technical solution, a mounting position exists between the two notches. The first connecting portion is connected to the first part between the two notches, thereby making it convenient for the first connecting portion to deform relative to the bracket, and more favorably providing a space for the cell assembly to deform along the first direction.

In some embodiments in the first aspect of this application, when viewed along the first direction, the first fixing piece protrudes beyond an edge of the bracket along a direction perpendicular to the first direction.

In the above technical solution, when viewed along the first direction, the first fixing piece protrudes beyond the edge of the bracket along the direction perpendicular to the first direction, thereby reducing the risk of interference between the first fixing piece and other structures of the battery module.

In some embodiments in the first aspect of this application, when viewed along the first direction, a projection of the first fixing piece overlaps a projection of the cell assembly.

In the above technical solution, when viewed along the first direction, the projection of the first fixing piece overlaps the projection of the cell assembly, thereby reducing the risk of interference between the first fixing piece and other structures.

In some embodiments in the first aspect of this application, the first connecting portion and the first constraining portion are formed in one piece.

In the above technical solution, the first connecting portion and the first constraining portion are formed in one piece, thereby facilitating the manufacturing and molding of the first fixing piece, and increasing the structural strength of the first fixing piece.

In some embodiments in the first aspect of this application, the housing includes a first sidewall. One end of the first sidewall is connected to the bottom wall. The cell assembly includes a battery cell. Along a second direction, a tab is disposed at one end, oriented toward the first sidewall, of the battery cell. A second space is provided between the cell assembly and the first sidewall. The battery module further includes a second colloid. The second colloid is disposed in the second space. The second colloid connects the cell assembly and the first sidewall. A second fixing piece is further disposed on the bracket. The second fixing piece includes a second connecting portion and a second constraining portion. The second connecting portion is connected to the bracket. The second constraining portion is disposed in the second colloid. The second constraining portion is disposed toward the first sidewall. The second constraining portion protrudes beyond the second connecting portion.

In the above technical solution, a tab is disposed at one end, oriented toward the first sidewall, of the battery cell. Therefore, on the tab side, the dimension of the second space between the cell assembly and the first sidewall along the second direction is relatively large. The second constraining portion of the second fixing piece is disposed toward the first sidewall and protrudes beyond the second connecting portion, so that the dimension of the second constraining portion along the second direction can be set to be relatively large, thereby fully utilizing the space inside the housing in the second direction. The second constraining portion is disposed in the second colloid, thereby increasing the connection area between the second constraining portion and the second colloid, and further improving the stability of the bracket.

In some embodiments in the first aspect of this application, when viewed along a direction opposite to the first direction, a projection of the second fixing piece lies within the second space.

In the above technical solution, when viewed along a direction opposite to the first direction, the projection of the second fixing piece lies within the second space, thereby reducing the risk of interference between the second fixing piece and other structures.

In some embodiments in the first aspect of this application, the second connecting portion and the second constraining portion are formed in one piece.

In the above technical solution, the second connecting portion and the second constraining portion are formed in one piece, so that the second fixing piece is a one-piece molded structure, thereby facilitating the manufacturing and molding of the second fixing piece, and increasing the structural strength of the second fixing piece.

In some embodiments in the first aspect of this application, the housing includes a second sidewall and two third sidewalls. The cell assembly includes a battery cell. Along a second direction, a tab is disposed at one end of the battery cell, the end the battery cell being oriented away from the second sidewall, of the battery cell. A third space is provided between the cell assembly and the second sidewall. The two third sidewalls are disposed opposite to each other along a third direction. The first direction, the second direction, and the third direction are perpendicular to each other. The battery module further includes a third colloid. The third colloid is disposed in the third space. The third colloid connects the cell assembly, the second sidewall, and the third sidewalls. A third fixing piece is further disposed on the bracket. The third fixing piece includes a third connecting portion and a third constraining portion. The third connecting portion is connected to the bracket. The third constraining portion is disposed in the third colloid, and protrudes toward the third sidewalls beyond a surface of the third connecting portion along the third direction.

In the above technical solution, a tab is disposed at one end of the battery cell, the end of the battery cell being oriented away from the second sidewall. Therefore, the dimension of the third space between the cell assembly and the second sidewall along the second direction is relatively small. The second constraining portion of the second fixing piece protrudes toward the third sidewalls beyond the surface of the third connecting portion along the third direction. Therefore, the dimension of the third constraining portion along the second direction can be set to be relatively small, and the dimension of the third constraining portion along the third direction can be set to be relatively large, thereby fully utilizing the space inside the housing in the third direction and reducing the space occupation in the second direction. The third constraining portion is disposed in the third colloid, thereby increasing the connection area between the third constraining portion and the third colloid, and further improving the stability of the bracket.

In some embodiments in the first aspect of this application, the bracket is provided with two third fixing pieces. The third constraining portions of the two third fixing pieces extend toward each other.

In the above technical solution, the third constraining portions of the two third fixing pieces are both disposed in the third colloid, thereby further improving the stability of the bracket. The third constraining portions of the two third fixing pieces extend toward each other, thereby facilitating the arrangement of the two third fixing pieces and fully utilizing the space in the housing.

In some embodiments in the first aspect of this application, when viewed along a direction opposite to the first direction, a projection of the third fixing piece lies within the third space.

In the above technical solution, when viewed along a direction opposite to the first direction, the projection of the third fixing piece lies within the third space, thereby reducing the risk of interference between the third fixing piece and other structures.

In some embodiments in the first aspect of this application, the third connecting portion and the third constraining portion are formed in one piece.

In the above technical solution, the third connecting portion and the third constraining portion are formed in one piece, so that the third fixing piece is a one-piece molded structure, thereby facilitating the manufacturing and molding of the third fixing piece, and increasing the structural strength of the third fixing piece.

In some embodiments in the first aspect of this application, an end face on which the opening is located is a first end face. A first groove is provided on the first end face. The bracket includes a mating portion. The mating portion is accommodated in the first groove.

In the above technical solution, the first groove coordinates with the mating portion to not only improve the mounting stability of the bracket, but also enable the housing to bear the weight of the bracket, thereby reducing the risk of the bracket squeezing the cell assembly.

In some embodiments in the first aspect of this application, the first colloid is configured to be formed by curing a first insulation material disposed in the first space.

In the above technical solution, the first colloid is configured to be formed by curing the first insulation material disposed in the first space, thereby making it convenient to fill the first space with the first colloid and convenient for the first colloid to connect the bracket and the cell assembly.

According to a second aspect, an embodiment of this application provides a battery pack. The battery pack includes the battery module disclosed in any one of the above embodiments and a second circuit board. The second circuit board is disposed on one side, away from the cell assembly, of the bracket.

In the above technical solution, the stability of the bracket of the battery module according to any one of the above embodiments is relatively high, and the structural strength of the battery module is relatively high. Therefore, the structural strength of the battery pack containing the battery module is relatively high. The second circuit board is disposed on one side, away from the cell assembly, of the bracket, thereby improving the mounting stability of the circuit board.

According to a third aspect, an embodiment of this application provides an electrical device. The electrical device includes the battery pack disclosed in the above embodiment.

In the above technical solution, the battery pack disclosed in the above embodiment is of relatively high structural strength, thereby improving the electrical safety of the electrical device powered by the battery pack and improving the electrical stability of the electrical device.

### BRIEF DESCRIPTION OF DRAWINGS

To describe technical solutions in some embodiments of this application more clearly, the following outlines the drawings to be used in some embodiments. Understandably, the following drawings show merely some embodiments of this application, and therefore, are not intended to limit the scope.
FIG. 1 is an exploded view of a battery pack according to some embodiments of this application;
FIG. 2 is a schematic structural diagram of a housing according to some embodiments of this application;
FIG. 3 is a schematic diagram of a partial structure of a cell assembly according to some embodiments of this application;
FIG. 4 is a cross-sectional view of a cell assembly according to some embodiments of this application;
FIG. 5 is a view of a partial structure of a battery pack viewed along a direction opposite to a first direction according to some embodiments of this application;
FIG. 6 is a cross-sectional view of sectioning along a P1-P1 line shown in FIG. 5;
FIG. 7 is a close-up view of a part D1 shown in FIG. 5;
FIG. 8 is a schematic structural diagram of a bracket according to some embodiments of this application;
FIG. 9 is a schematic structural diagram of a bracket from another viewing angle according to some embodiments of this application;
FIG. 10 is a close-up view of a part D2 shown in FIG. 9;
FIG. 11 is a schematic diagram of a bracket viewed along a direction opposite to a first direction according to some embodiments of this application;
FIG. 12 is a schematic diagram of a relative relationship between a cell assembly and a bracket according to some embodiments of this application;
FIG. 13 is a schematic diagram of FIG. 12 as viewed from another viewing angle;
FIG. 14 is a schematic diagram of a cell assembly and a bracket as viewed along a direction opposite to a first direction;
FIG. 15 is a cross-sectional view of sectioning along a P2-P2 line shown in FIG. 5;
FIG. 16 is a close-up view of a part D3 shown in FIG. 15;
FIG. 17 is a schematic structural diagram of a bracket according to some embodiments of this application;
FIG. 18 is a close-up view of a part D4 shown in FIG. 4;
FIG. 19 is a close-up view of a part D5 shown in FIG. 9; and
FIG. 20 is a close-up view of a part D6 shown in FIG. 12.

List of reference numerals: 1000-battery pack; 100-battery module; 10-housing; 11-accommodation space; 12-opening; 13-bottom wall; 14-sidewall; 141-first sidewall; 142-second sidewall; 143-third sidewall; 144-first end face; 145-first groove; 20-cell assembly; 21-battery cell; 211-tab; 211a-positive tab; 211b-negative tab; 22-first structural component; 220-conductive strip; 221-first conductive portion; 222-second conductive portion; 223-adapter; 23-buffer component; 30-bracket; 31-first fixing piece; 311-first connecting portion; 312-first constraining portion; 32-extension portion; 321-notch; 322-first part; 33-second fixing piece; 331-second connecting portion; 332-second constraining portion; 34-third fixing piece; 341-third connecting portion; 342-third constraining portion; 35-mating portion; 36-base portion; 40-colloid; 41-first colloid; 42-second colloid; 43-third colloid; 44-fourth colloid; 200-second circuit board; 300-cover; X-first direction; Y-second direction; Z-third direction; Q1-first space; Q2-second space; Q3-third space; Q4-fourth space.

### DETAILED DESCRIPTION OF EMBODIMENTS

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. Generally, the components of some embodiments of this application, which are described and illustrated in the drawings hereto, may be arranged and designed in a variety of different configurations.

Therefore, the following detailed description of some embodiments of this application provided with reference to the drawings is not intended to limit the scope of this application as claimed, but merely represents selected embodiments of this application. It is hereby noted that to the extent that no conflict occurs, some embodiments of this application and the features in some embodiments may be combined with each other.

It is hereby noted that similar reference numerals and letters indicate similar items in the following drawings. Therefore, once an item is defined in one drawing, the item does not need to be further defined or construed in subsequent drawings.

In the description of some embodiments of this application, it is hereby noted that an indicated directional or positional relationship is a directional or positional relationship based on illustration in the drawings, or a directional or positional relationship exhibited by a product hereof is typically mounted, or a directional or positional relationship typically understood by a person skilled in the art, and is merely intended for ease or brevity of describing this application, but does not indicate or imply that the indicated device or component is necessarily arranged in the specified direction or position or constructed or operated in the specified direction or position. Therefore, such terms are not to be understood as a limitation on this application. In addition, the terms "first", "second", "third", and so on are merely used for differentiated description, but not to be understood as indicating or implying order of precedence.

Currently, the market trend shows that batteries are applied more extensively. Batteries are widely applied to electric means of transport such as electric bicycles, electric motorcycles, and electric vehicles, and in many other fields such as electric tools, unmanned aerial vehicles, and energy storage devices. The market demand for batteries keeps soaring with the increase of the application fields of the batteries.

The development of the battery technology needs to consider a variety of design factors concurrently, including performance parameters such as energy density, cycle life, discharge capacity, charge rate, and discharge rate. In addition, with the change of environmental conditions and/or internal conditions of the battery, the structural strength of the battery is also one of the key factors to consider.

In the related art, a battery pack includes a housing, a circuit board, and a cell assembly. The circuit board is fixed inside the housing by a bracket, and the fixation of the bracket inside the housing needs to be reinforced.

In view of the above factors, an embodiment of this application provides a battery module. The battery module includes a housing, a cell assembly, a bracket, and a first colloid. An accommodation space is formed in the housing. An opening is provided at one end of the accommodation space along a first direction. The housing includes a bottom wall. The bottom wall is disposed opposite to the opening. The cell assembly is disposed in the accommodation space. Along the first direction the bracket is disposed on one side of the cell assembly, the side being oriented away from the bottom wall. A first space is provided between the bracket and the cell assembly. The first colloid is disposed in the first space. The first colloid connects the cell assembly and the bracket. The bracket is provided with a first fixing piece. The first fixing piece includes a first connecting portion and a first constraining portion. The first constraining portion is disposed in the first colloid. A first angle A is provided between the first connecting portion and the first constraining portion, satisfying: 0° < A < 180°.

The angle A between the first connecting portion and the first constraining portion of the first fixing piece satisfies 0° < A < 180°, so that the first constraining portion is bent relative to the first connecting portion. The first constraining portion is disposed in the first colloid, so that the bracket can be connected to the first colloid through the first fixing piece, thereby improving the connection stability of the bracket, and in turn, improving the structural strength of the battery module.

When the angle A between the first connecting portion and the first constraining portion of the first fixing piece satisfies 0° < A < 180°, in contrast to the scenario in which the angle between the first constraining portion and the first connecting portion is 0° or 180°, this arrangement increases the contact area between the first constraining portion and the first colloid, and further improves the stability of the bracket.

The first constraining portion is bent relative to the first connecting portion, thereby providing a deformation space for the expansion of the cell assembly in the first direction, and reducing the risk of squeezing the first fixing piece when the battery cell expands.

An embodiment of this application provides an electrical device that uses a battery module or battery pack as a power supply. The electrical device may be, but is not limited to, an electronic device, an electric tool, an electric means of transport, an unmanned aerial vehicle, and an energy storage device. The electronic device may be a mobile phone, a tablet computer, a laptop computer, or the like. The electric tool may be an electric drill, an electric chainsaw, or the like. The electric means of transport may be an electric vehicle, an electric motorcycle, an electric bicycle, or the like.

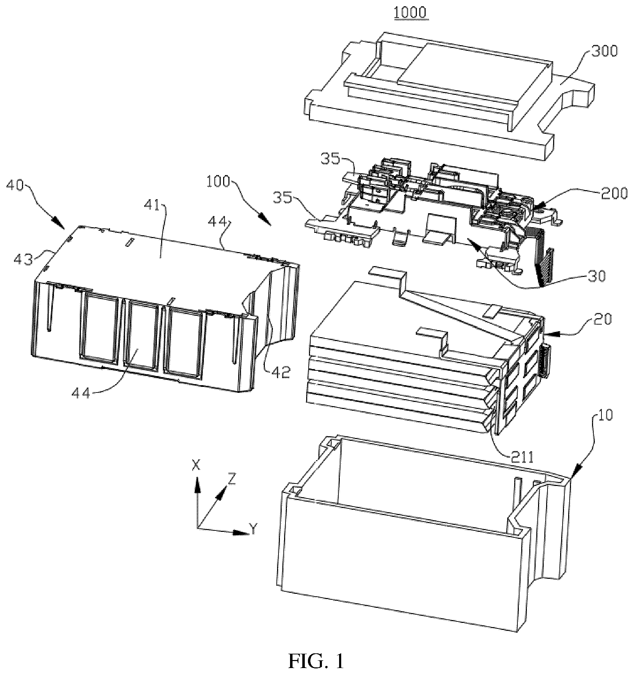

As shown in FIG. 1, a battery pack 1000 includes a battery module 100. The battery module 100 includes a housing 10 and a cell assembly 20.

An accommodation space 11 is formed in the housing 10. An opening 12 is provided at one end of the accommodation space 11 along a first direction X. The cell assembly 20 enters the accommodation space 11 from the opening 12 of the housing 10, and is accommodated in the accommodation space 11.

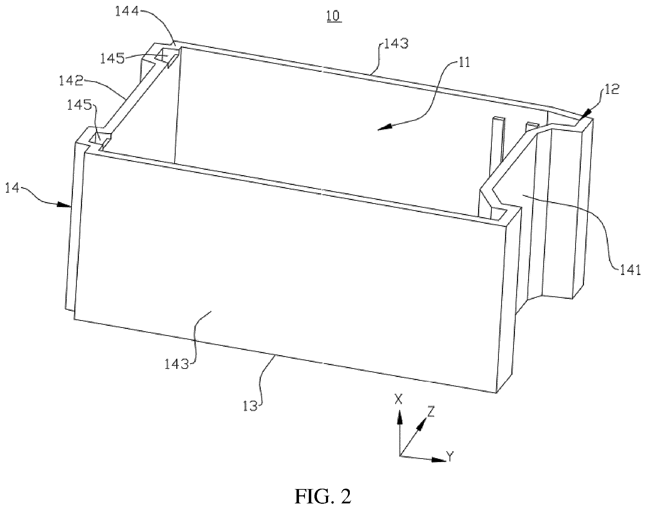

As shown in FIG. 2, the housing 10 includes a bottom wall 13 and sidewalls 14. The bottom wall 13 and sidewalls 14 together form an accommodation space 11. One end of the sidewalls 14 surrounds the edge of the bottom wall 13. The other end of the sidewalls 14 defines an opening 12 of the accommodation space 11.

In some embodiments, the sidewalls 14 are disposed around the cell assembly 20 peripherally. The bottom wall 13 may be configured to bear the weight of the cell assembly 20. The sidewalls 14 and the bottom wall 13 may be formed in one piece, so as to form a one-piece molded housing 10. The sidewalls 14 and the bottom wall 13 may be formed in one piece by casting, injection molding, stamping, or the like.

The shape of the housing 10 includes, but is not limited to, a cuboid, a cylinder, or an ellipse. FIG. 2 shows an example in which the housing 10 is in the shape of a cuboid. The sidewalls 14 include a first sidewall 141, a second sidewall 142, and two third sidewalls 143. One end of the first sidewall 141, the second sidewall 142, and the two third sidewalls 143 is connected to the edge of the bottom wall 13. The other end of the first sidewall 141, the second sidewall 142, and the two third sidewalls 143 together define the opening 12 of the accommodation space 11. The bottom wall 13 and the opening 12 are disposed opposite to each other in a first direction X.

The second sidewall 142 and the first sidewall 141 are disposed opposite to each other along a second direction Y. The two third sidewalls 143 are disposed opposite to each other along a third direction Z. The third sidewalls 143 connect the first sidewall 141 and the second sidewall 142 along the third direction Z. The first direction X, the second direction Y, and the third direction Z are perpendicular to each other.

The housing 10 is made of a material including but not limited to aluminum, steel, and plastic.

Referring to FIG. 1, FIG. 3, and FIG. 4, in some embodiments, the cell assembly 20 includes a plurality of battery cells 21 stacked along the first direction X. "A plurality of" means two or more. The battery cell 21 may be a pouch cell or a hard-shell cell.

A tab 211 is disposed on the battery cell 21. The tab 211 is configured to output the electrical energy of the battery cell 21 or charge the battery cell 21. The battery cell 21 includes a positive tab 211a and a negative tab 211b. The positive tab 211a and the negative tab 211b may be disposed on the same side of the battery cell 21, so as to facilitate the reasonable arrangement of the cell assembly 20 in the housing 10, fully utilize the internal space of the housing 10, and facilitate connection of the tabs 211 to other components that need to be electrically connected to the tabs 211 of the battery cell 2.

In this embodiment, along the second direction Y, the tabs 211 of the battery cell 21 are disposed on the same side of the battery cell 21, and oriented toward the first sidewall 141. In other embodiments, along the second direction Y, the positive tab 211a and the negative tab 211b are located on two opposite sides of the battery cell 21 respectively.

In some embodiments, the cell assembly 20 further includes a protection piece (not shown in the drawing). The protection piece forms a protection space. At least two battery cells 21 may be stacked along the first direction X in each protection space, or one battery cell 21 may be disposed in each protection space. The protection piece can protect the battery cells 21, and reduce the risk of damage caused by the squeezing against other structures when the battery cell 21 expands. The protection piece can also improve the heat dissipation capacity of the battery cell 21. The protection piece may be an aluminum shell, a thermally conductive film, or the like. The tab 211 of the battery cell 21 extends out of the protection space.

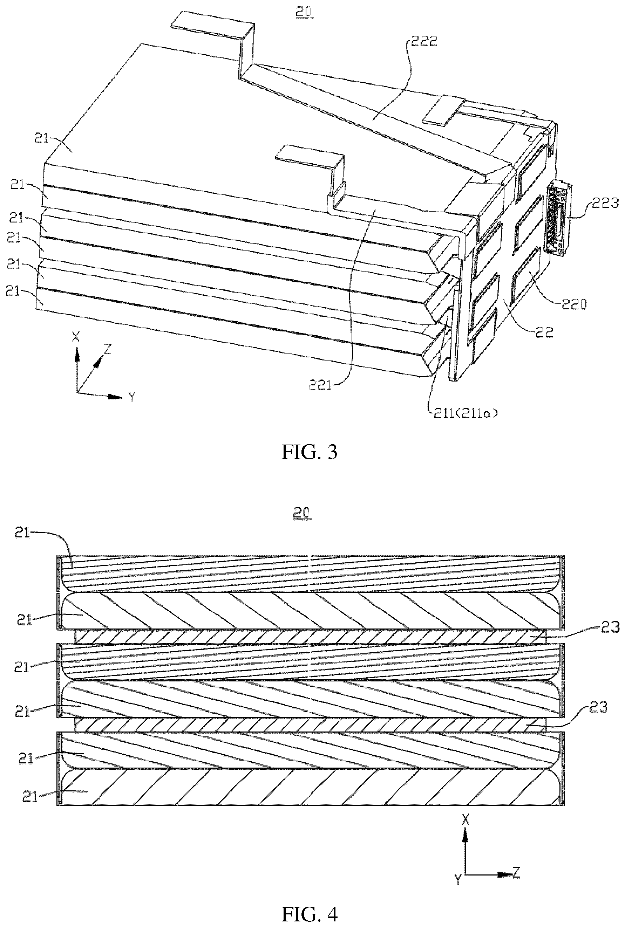

As shown in FIG. 3, in some embodiments, the battery module 100 includes a first conductive portion 221 and a second conductive portion 222. The first conductive portion 221 is configured to output electrical energy of the cell assembly 20 or deliver electrical energy to the cell assembly 20, and/or transmit electrical signal information of the cell assembly 20. The second conductive portion 222 is configured to output electrical energy of the cell assembly 20 or deliver electrical energy to the cell assembly 20, and/or transmit electrical signal information of the cell assembly 20.

The electrical signal information of the cell assembly 20 includes, but is not limited to, voltage, current, temperature, and the like.

In some embodiments, the first structural component 22 includes a first circuit board. Optionally, the first circuit board includes a printed circuit board (PCB). Optionally, the first circuit board includes a flexible printed circuit board (FPC).

In some embodiments, the battery module 100 includes a conductive strip 220 disposed on the first structural component 22. The tabs 211 of adjacent battery cells are connected to the same conductive strip 220, so as to form a series connection or a parallel connection.

In some embodiments, the first structural component 22 includes an insulation bracket.

As shown in FIG. 3, in some embodiments, the cell assembly 20 further includes a buffer component 23. At least one buffer component 23 is disposed between two adjacent battery cells 21. When the battery cell 21 expands, the buffer component 23 is squeezed. The buffer component 23 provides a buffer space for the expansion of the two adjacent battery cells 21. The buffer component 23 may be foam, rubber pad, or the like.

As shown in FIG. 1, in some embodiments, the battery pack 1000 further includes a second circuit board 200. The second circuit board 200 may be electrically connected to the first structural component 22 through an adapter 223, thereby enabling the second circuit board 200 to receive information from the first structural component 22.

In some embodiments, the first conductive portion 221 is connected to the second circuit board 200.

In some embodiments, the second conductive portion 222 is connected to the second circuit board 200.

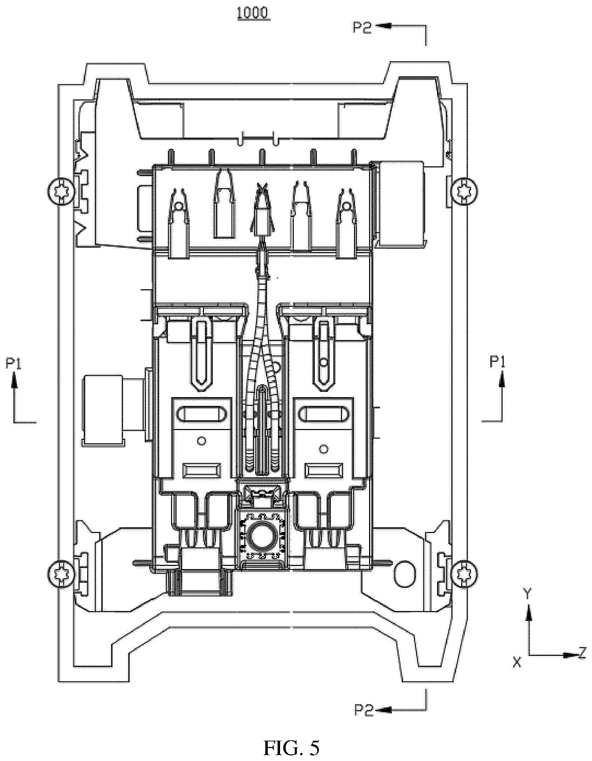

As shown in FIG. 1, FIG. 5, FIG. 6, and FIG. 7, in some embodiments, the battery module 100 further includes a bracket 30. The bracket 30 is disposed on one side of the cell assembly 20, the side being oriented away from the bottom wall 13. The second circuit board 200 is disposed on one side of the bracket 30, the side being oriented away from the cell assembly 20. Along the first direction X, a first space Q1 is provided between the bracket 30 and the cell assembly 20. The first space Q1 can provide a space for the cell assembly 20 to expand, reduce the risk that the cell assembly 20 is squeezed by the bracket 30 after expanding, and in turn, reduce the risk of damage to the battery cell 21.

The bracket 30 may be made of a metal material such as aluminum, copper, or steel. Alternatively, the bracket 30 may be made of a non-metal material such as plastic or silicone.

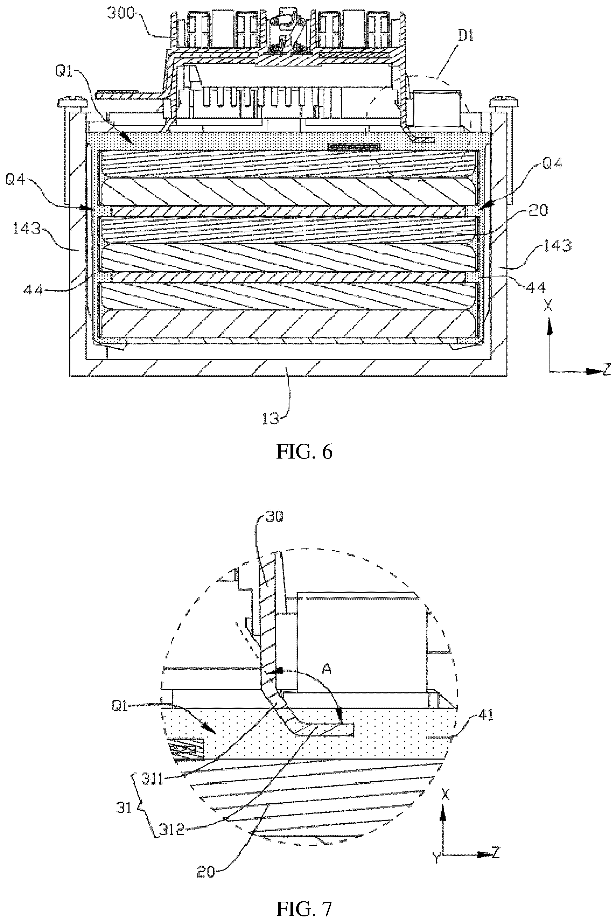

In some embodiments, along the first direction X, the bracket 30 may be fully located in the accommodation space 11. In some other embodiments, along the first direction X, the bracket 30 may be partially or fully located outside the accommodation space 11. In some embodiments, as shown in FIG. 6 and FIG. 7, the battery module 100 further includes a first colloid 41. The first colloid 41 is disposed in the first space Q1. The first colloid 41 connects the cell assembly 20 and the bracket 30, and can improve the stability of the relative position relationship between the bracket 30 and the cell assembly 20, thereby improving the stability of the battery module 100 under vibration, impact, or other conditions.

In some embodiments, the first colloid 41 is configured to be formed by curing a first insulation material disposed in the first space Q1. The first insulation material includes, but is not limited to, a potting glue or styrofoam.

In some embodiments, the first colloid 41 may fill the first space Q1 by pouring. A flowable first insulation material is poured from a gap communicating to the first space Q1. The flowable first insulation material can flow into the first space Q1. The insulation material is cured to form a first colloid 41. The first colloid connects the bracket 30 and the cell assembly 20. This makes it convenient for the first colloid 41 to fill the first space Q1 and connect the bracket 30 and the cell assembly 20, thereby maximally increasing the contact area between the first colloid and the bracket 30 and increasing the contact area between the first colloid and the cell assembly 20, and in turn, increasing the connection area between the first colloid 41 and the bracket 30 as well as the connection area between the first colloid 41 and the cell assembly 20, and improving the connection stability between the bracket 30 and the cell assembly 20.

In some embodiments, the flowable first insulation material may be poured into the first space Q1 through the opening 12.

Still referring to FIG. 6 and FIG. 7, in some embodiments, the bracket 30 is provided with a first fixing piece 31. The first fixing piece 31 is configured to coordinate with the first colloid 41 to connect the bracket 30 and the first colloid 41. The first fixing piece 31 includes a first connecting portion 311 and a first constraining portion 312. The first constraining portion 312 is disposed in the first colloid 41. A first angle A is provided between the first connecting portion 311 and the first constraining portion 312, satisfying: 0° < A < 180°.

The angle A between the first connecting portion 311 and the first constraining portion 312 of the first fixing piece 31 satisfies 0° < A < 180°, so that the first constraining portion 312 is bent relative to the first connecting portion 311. The first constraining portion 312 is disposed in the first colloid 41, so that the bracket 30 can be connected to the first colloid 41 through the first fixing piece 31, thereby improving the connection stability of the bracket 30, and in turn, improving the structural strength of the battery module 100. This can increase the contact area between the first constraining portion 312 and the first colloid 41, and further increase the stability of the bracket 30. The first constraining portion 312 is bent relative to the first connecting portion 311, thereby providing a deformation space for the expansion of the cell assembly 20 in the first direction X, and reducing the risk of squeezing the first fixing piece 31 when the battery cell 21 expands.

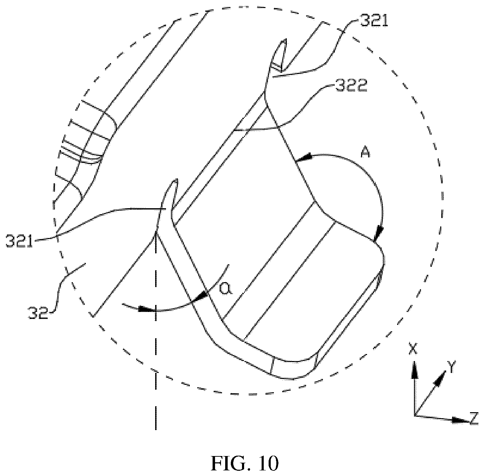

The first connecting portion 311 may be a plate-like structure. The first connecting portion 311 extends into the first space Q1. In some embodiments, the extension direction of the first connecting portion 311 may be parallel to the first direction X. Alternatively, the extension direction of the first connecting portion 311 may deviate from the first direction X by a specified angle to make it convenient for the first connecting portion 311 to fold relative to the bracket 30 around the junction between the first connecting portion 311 and the bracket 30. As an example, as shown in FIG. 10, the first connecting portion 311 extends in a direction at an acute angle a with respect to the first direction X, and a may be an acute angle less than 90°. For example, a is 5°, 8°, 10°, 12°, 15°, or the like.

The first angle A between the first connecting portion 311 and the first constraining portion 312 may be an acute angle, that is, 0° < A < 90°. Alternatively, the first angle A between the first connecting portion 311 and the first constraining portion 312 may be an obtuse angle, that is, 90° < A < 180°. Alternatively, the first angle A between the first connecting portion 311 and the first constraining portion 312 may be a right angle, that is, A = 90°.

In some embodiments, as shown in FIG. 7, the first angle A is an obtuse angle. The first angle A is facing away from the cell assembly 20. The first angle being an obtuse angle makes it convenient for the first fixing piece 31 to deform in the first direction X, and reduces the risk that the cell assembly 20 squeezes the first fixing piece 31 when expanding.

In an embodiment in which the first angle A is an obtuse angle, 135° ≤ A ≤ 160°. As an example, A may be 135°, 140°, 145°, 150°, 155°, 160°, or the like.

The first angle A falling within 135° ≤ A ≤ 160° not only leads to a larger connection area between the first fixing piece 31 and the first colloid 41, improves the connection stability of the bracket 30, but also makes it convenient for the first fixing piece 31 to deform in the first direction X, favorably provides a deformation space for the expansion of the cell assembly 20 in the first direction X, and reduces the risk that the cell assembly 20 squeezes the first fixing piece 31 when expanding.

The first constraining portion 312 is disposed in the first colloid 41. Specifically, the first constraining portion 312 is buried in the first colloid 41. Along the first direction X, the first colloid 41 is disposed on both sides of the first constraining portion 312. The first colloid 41 wraps the first constraining portion 312, thereby increasing the contact area between the first constraining portion 312 and the first colloid 41, and in turn, improving the connection stability between the bracket 30 and the first colloid 41. Along the extension direction of the first constraining portion 312, the first constraining portion 312 may be partially buried in the first colloid 41, or may be fully buried in the first colloid 41.

In some embodiments, at least a part of the first connecting portion 311 is disposed in the first colloid 41. Therefore, at least a part of the first constraining portion 312 and at least a part of the first connecting portion 311 are both disposed in the first colloid 41, thereby further increasing the connection area of the first fixing piece 31, and further improving the connection stability of the bracket 30.

At least a part of the first connecting portion 311 is disposed in the first colloid 41. Specifically, at least a part of the first connecting portion 311 is buried in the first colloid 41. The first colloid 41 wraps the first connecting portion 311, thereby increasing the contact area between the first fixing piece 31 and the first colloid 41, and in turn, improving the connection stability between the bracket 30 and the first colloid 41. The first connecting portion 311 may be partially buried in the first colloid 41, or may be fully buried in the first colloid 41.

In a case that the first connecting portion 311 is at least partially disposed in the first colloid 41, the first constraining portion 312 may be partially buried in the first colloid 41, or may be fully buried in the first colloid 41.

In some embodiments, the first connecting portion 311 and the first constraining portion 312 are formed in one piece, thereby facilitating the manufacturing and molding of the first fixing piece 31, and increasing the structural strength of the first fixing piece 31.

That the first connecting portion 311 and the first constraining portion 312 are formed in one piece means that the first fixing piece 31 is a one-piece molded structure. The first fixing piece 31 may be formed by a one-piece molding method such as casting, injection molding, or bending. For example, a sheet material structure is divided into two parts. Of the two parts, one part is folded around an axis relative to the other part, so that the angle between the two parts is greater than 0° and less than 180°. The two parts form the first connecting portion 311 and the first constraining portion 312, respectively.

In some other embodiments, the first connecting portion 311 and the first constraining portion 312 may be separately disposed and then connected into one to form the first fixing piece 31. The method of connection between the first connecting portion 311 and the first constraining portion 312 may be a detachable connection, such as bolting or snap connection. In this way, when the first connecting portion 311 or the first constraining portion 312 is partially damaged, it is not necessary to replace the entire first fixing piece 31, thereby reducing cost. The method of connection between the first connecting portion 311 and the first constraining portion 312 may be a fixed connection such as welding, bonding, or bolting, thereby increasing the connection strength between the first connecting portion 311 and the first constraining portion 312.

In some embodiments, the bracket 30 and the first fixing piece 31 may be formed in one piece, thereby facilitating manufacturing and molding, and increasing the structural strength of the entirety of the first fixing piece 31 and the bracket 30. For example, the bracket 30 and the first fixing piece 31 are formed by a one-piece molding method such as casting, injection molding, or bending.

In some other embodiments, the bracket 30 and the first fixing piece 31 may be separately disposed and then connected into one. The method of connection between the bracket 30 and the first fixing piece 31 may be a detachable connection, such as bolting or snap connection. In this way, when the first fixing piece 31 or the bracket 30 is partially damaged, it is not necessary to replace the entirety of the bracket 30 and the first fixing piece 31, thereby reducing cost. The method of connection between the bracket 30 and the first fixing piece 31 may be a fixed connection such as welding, bonding, or bolting, thereby increasing the connection strength between the first fixing piece 31 and the bracket 30. In this embodiment in which the first fixing piece 31 and the bracket 30 are separately disposed and then connected into a whole, the first fixing piece 31 and the bracket 30 may be made of the same material or different materials.

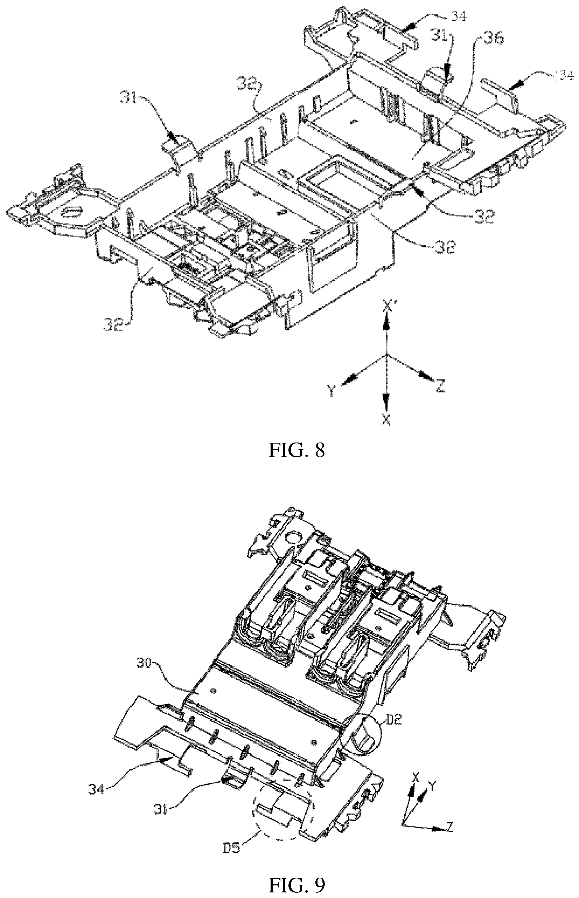

As shown in FIG. 8, FIG. 9, and FIG. 10, in some embodiments, the bracket 30 includes a base portion 36 and an extension portion 32. The extension portion 32 extends from the base portion toward the cell assembly 20. The extension portion 32 includes a first part 322 and two notches 321. The first part 322 is located between the two notches 321. The first connecting portion 311 is connected to the first part 322. The first connecting portion 311 is connected to the first part 322 between the two notches 321, thereby making it convenient for the first connecting portion 311 to deform relative to the bracket 30, and more favorably providing a space for the cell assembly 20 to deform along the first direction X.

In some embodiments, the extension portion 32 is located at the edge of the base portion 36. The notch 321 runs through the extension portion 32 along the extension direction of the first constraining portion 312. The notch 321 may be in various shapes such as a U shape, a semicircle, or a V shape.

In some embodiments, when viewed along the first direction X, the first fixing piece 31 protrudes beyond the edge of the bracket 30, thereby reducing the risk of interference between the first fixing piece 31 and other structures of the battery module 100.

In some embodiments, when viewed along the first direction X, at least a part of the first fixing piece 31 does not overlap the bracket 30.

In some embodiments, when viewed along a direction X' opposite to the first direction X, the junction between the first connecting portion 311 and the bracket 30 may overlap the edge of the bracket 30. Therefore, when viewed along the first direction X, the first fixing piece 31 protrudes beyond the edge of the bracket 30.

The bracket 30 may is provided with one first fixing piece 31 or a plurality of first fixing pieces 31. "A plurality of" means two or more. In an embodiment in which the bracket 30 is provided with a plurality of first fixing pieces 31, the plurality of first fixing pieces 31 are disposed at intervals on the bracket 30. For example, the first fixing pieces 31 are arranged at intervals along the edge of the bracket 30. The first constraining portion 312 of each first fixing piece 31 is buried in the first colloid 41. The bracket 30 is connected to the first colloid 41 through a plurality of first fixing pieces 31, thereby further improving the stability of the bracket 30.

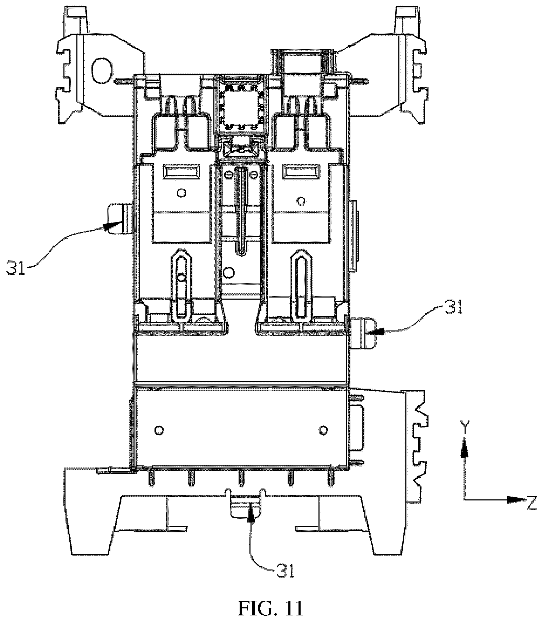

As shown in FIG. 11, the bracket 30 is provided with three first fixing pieces 31. One first fixing piece 31 is disposed at one end of the bracket 30 along the second direction Y, and the other two first fixing pieces are disposed at two opposite sides of the bracket 30 along the third direction Z, respectively.

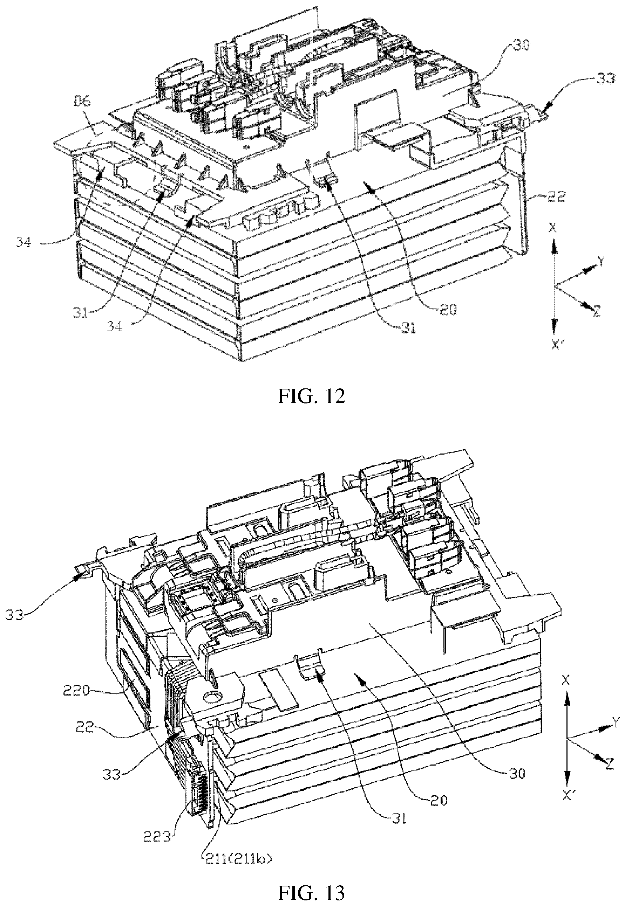

As shown in FIG. 12 to FIG. 14, in some embodiments, when viewed along a direction X' opposite to the first direction X, the first fixing piece 31 overlaps the cell assembly 20, thereby reducing the risk of interference between the first fixing piece 31 and other structures.

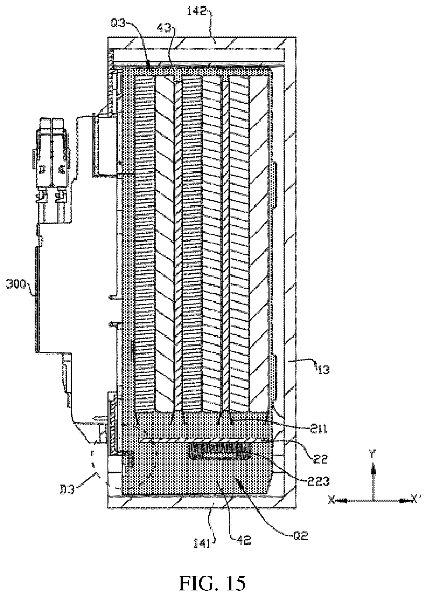

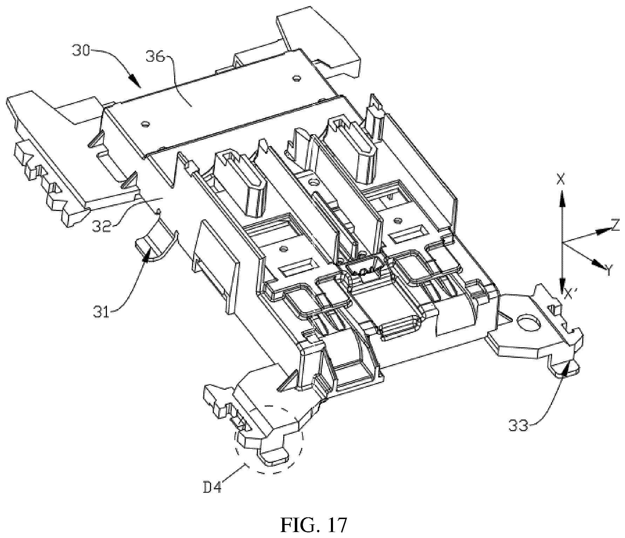

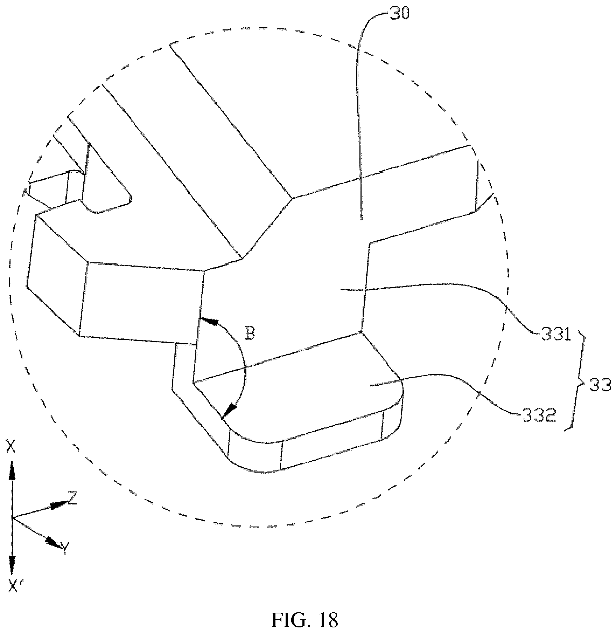

As shown in FIG. 15 to FIG. 18, in some embodiments, a tab 211 is disposed at one end of the battery cell 21, the end of the battery cell 21being oriented toward the first sidewall 141. A second space Q2 is provided between the cell assembly 20 and the first sidewall 141. The positive tab 211a and the negative tab 211b of the battery cell 21 are both disposed at one end of the battery cell 21, the end of the battery cell 21being oriented toward the first sidewall 141. The first structural component 22 connected to the positive tab 211a and the negative tab 211b as mentioned above is disposed in the second space Q2.

The second space Q2 and the first space Q1 communicate to each other or are independent of each other.

The battery module 100 further includes a second colloid 42. The second colloid 42 is disposed in the second space Q2. The second colloid 42 connects the cell assembly 20 and the first sidewall 141, and can improve the stability of the cell assembly 20 in the housing 10, thereby improving the stability of the battery module 100 under vibration, impact, or other conditions.

The second colloid 42 wraps the tab 211 and the first structural component 22, and can protect the tab 211 and the first structural component 22, and reduce the risk that the first structural component 22 and the tab 211 contact other conductive pieces to cause a short circuit of the battery module 100, thereby improving the safety performance of the battery module 100. The second colloid 42 can further serve a sealing function in the second space Q2, thereby reducing the risk of leakage of the battery module 100.

In some embodiments, the second colloid 42 is configured to be formed by curing a second insulation material disposed in the second space Q2. The second insulation material includes, but is not limited to, a potting glue or styrofoam.

In some embodiments, the second colloid 42 may fill the second space Q2 by pouring. A flowable second insulation material is poured from a gap communicating to the second space Q2. The flowable second insulation material can flow into the second space Q2. The second insulation material is cured to form a second colloid 42. The second colloid connects the first sidewall 141 and the cell assembly 20. The second colloid 42 wraps the tab 211 and the first structural component 22. This makes it convenient for the second colloid 42 to fill the second space Q2 and connect the first sidewall 141 and the cell assembly 20, thereby maximally increasing the contact area between the second colloid and the first sidewall 141 and increasing the contact area between the second colloid and the cell assembly 20, and in turn, increasing the connection area between the second colloid 42 and the first sidewall 141 as well as the connection area between the second colloid 42 and the cell assembly 20, and improving the connection stability between the first sidewall 141 and the cell assembly 20.

In some embodiments, the flowable second insulation material may be poured into the second space Q2 through the opening 12.

The second insulation material and the first insulation material may be the same type of material or different types of materials.

In an embodiment in which the first space Q1 communicates to the second space Q2, glue may be poured from the opening 12. The flowable insulation material can flow to the second space Q2 and the first space Q1 until the first space Q1 and the second space Q2 are filled with the glue. After the insulation material is cured, the insulation material forms a first colloid 41 in the first space Q1, and forms a second colloid 42 in the second space Q2. The first colloid 41 and the second colloid 42 are formed in one piece, thereby simplifying the molding manner of the first colloid 41 and the second colloid 42.

In an embodiment in which the first space Q1 is independent of but not communicating to the second space Q2, the glue may be poured into the first space Q1 and the second space Q2 separately, thereby forming independent and discrete first colloid 41 and second colloid 42 in the first space Q1 and the second space Q2 respectively.

In some embodiments, the bracket 30 is provided with a second fixing piece 33. The second fixing piece 33 is configured to coordinate with the second colloid 42 to connect the bracket 30 and the second colloid 42. The second fixing piece 33 includes a second connecting portion 331 and a second constraining portion 332. The second connecting portion 331 is connected to the bracket 30. The second constraining portion 332 is disposed in the second colloid 42.

In some embodiments, along the second direction Y, the second constraining portion 332 is disposed toward the first sidewall 141, and the second constraining portion 332 protrudes beyond the second connecting portion 331. By utilizing the space inside the housing 10 in the second direction Y, the second constraining portion 332 is disposed in the second colloid 42, thereby increasing the connection area between the second constraining portion 332 and the second colloid 42, and further improving the stability of the bracket 30.

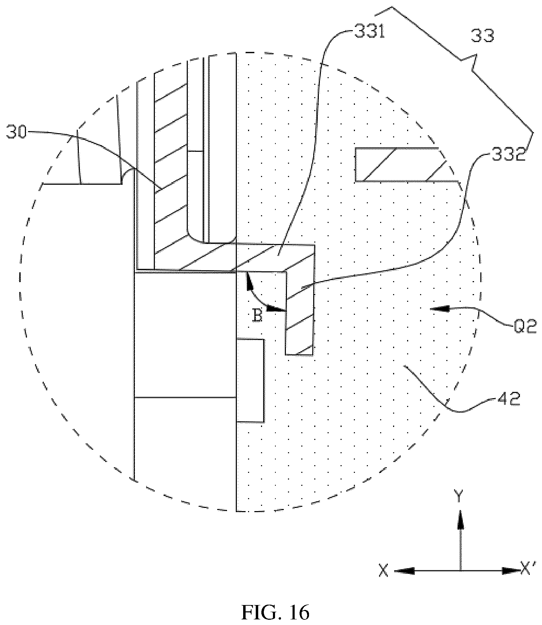

Still referring to FIG. 15 and FIG. 16, a second angle B is provided between the second connecting portion 331 and the second constraining portion 332, satisfying: 0° < B < 180°, so that the second constraining portion 332 is bent relative to the second connecting portion 331. The second constraining portion 332 is disposed in the second colloid 42, so that the bracket 30 can be connected to the second colloid 42 through the second fixing piece 33, thereby improving the connection stability of the bracket 30, and in turn, improving the structural strength of the battery module 100.

When the angle B between the second connecting portion 331 and the second constraining portion 332 of the second fixing piece 33 satisfies 0° < B < 180°, in contrast to the scenario in which the angle between the second constraining portion 332 and the second connecting portion 331 is 0° or 180°, this arrangement increases the contact area between the second constraining portion 332 and the second colloid 42, and further improves the stability of the bracket 30.

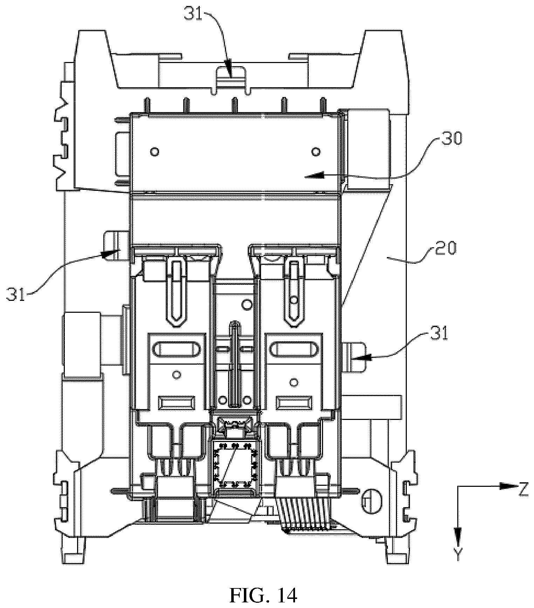

The second connecting portion 331 may be a plate-like structure. The second connecting portion 331 may extend into the second space Q2. In some embodiments, the extension direction of the second connecting portion 331 may be parallel to the first direction X. Alternatively, the extension direction of the second connecting portion 331 may deviate from the first direction X by an angle. For example, the angle by which the extension direction of the first connecting portion 311 deviates from the first direction X is denoted as b, and b may be an acute angle less than 90°. For example, b is 5°, 8°, 10°, 12°, 15°, or the like. FIG. 13 and FIG. 14 show a scenario in which the extension direction of the second connecting portion 331 is parallel to the first direction X.

The second angle B between the second connecting portion 331 and the second constraining portion 332 may be an acute angle, that is, 0° < B < 90°. Alternatively, the second angle B between the second connecting portion 331 and the second constraining portion 332 may be an obtuse angle, that is, 90° < B < 180°. Alternatively, the second angle B between the second connecting portion 331 and the second constraining portion 332 may be a right angle, that is, B = 90°. As shown in FIG. 13, the second constraining portion 332 is a plate-like structure. The second constraining portion 332 extends from the second connecting portion 331 toward the first sidewall 141 along the second direction Y. The second connecting portion 331 extends along the first direction X. The second constraining portion 332 extends along the second direction Y. The second connecting portion 331 is perpendicular to the second constraining portion 332. The second angle B between the second connecting portion 331 and the second constraining portion 332 is equal to 90°.

In some embodiments, the second connecting portion 331 and the second constraining portion 332 are formed in one piece, thereby facilitating the manufacturing and molding of the second fixing piece 33, and increasing the structural strength of the second fixing piece 33.

That the second connecting portion 331 and the second constraining portion 332 are formed in one piece means that the second fixing piece 33 is a one-piece molded structure. The second fixing piece 33 may be formed by a one-piece molding method such as casting, injection molding, or bending. For example, a sheet material structure is divided into two parts. Of the two parts, one part is folded around an axis relative to the other part, so that the angle between the two parts is greater than 0° and less than 180°. The two parts form the second connecting portion 331 and the second constraining portion 332, respectively.

In some other embodiments, the second connecting portion 331 and the second constraining portion 332 may be separately disposed and then connected into one to form the second fixing piece 33. The method of connection between the second connecting portion 331 and the second constraining portion 332 may be a detachable connection, such as bolting or snap connection. In this way, when the second connecting portion 331 or the second constraining portion 332 is partially damaged, it is not necessary to replace the entire second fixing piece 33, thereby reducing cost. The method of connection between the second connecting portion 331 and the second constraining portion 332 may be a fixed connection such as welding, bonding, or bolting, thereby increasing the connection strength between the second connecting portion 331 and the second constraining portion 332.

In some embodiments, the bracket 30 and the second fixing piece 33 may be formed in one piece, thereby facilitating manufacturing and molding, and increasing the structural strength of the entirety of the second fixing piece 33 and the bracket 30. For example, the bracket 30 and the second fixing piece 33 are formed by a one-piece molding method such as casting, injection molding, or bending.

In some other embodiments, the bracket 30 and the second fixing piece 33 may be separately disposed and then connected into one. The method of connection between the bracket 30 and the second fixing piece 33 may be a detachable connection, such as bolting or snap connection. In this way, when the second fixing piece 33 or the bracket 30 is partially damaged, it is not necessary to replace the entirety of the bracket 30 and the second fixing piece 33, thereby reducing cost. The method of connection between the bracket 30 and the second fixing piece 33 may be a fixed connection such as welding, bonding, or bolting, thereby increasing the connection strength between the second fixing piece 33 and the bracket 30. In this embodiment in which the second fixing piece 33 and the bracket 30 are separately disposed and then connected into a whole, the second fixing piece 33 and the bracket 30 may be made of the same material or different materials.

The second constraining portion 332 is disposed in the second colloid 42. Specifically, the second constraining portion 332 is buried in the second colloid 42. Along the first direction X, the second colloid 42 is disposed on both sides of the second constraining portion 332. The second colloid 42 wraps the second constraining portion 332, thereby increasing the contact area between the second constraining portion 332 and the second colloid 42, and in turn, improving the connection stability between the bracket 30 and the second colloid 42. Along the extension direction of the second constraining portion 332, the second constraining portion 332 may be partially buried in the second colloid 42, or may be fully buried in the second colloid 42.

In some embodiments, at least a part of the second connecting portion 331 is disposed in the second colloid 42. Therefore, at least a part of the second constraining portion 332 and at least a part of the second connecting portion 331 are both disposed in the second colloid 42, thereby further increasing the connection area of the second fixing piece 33, and further improving the connection stability of the bracket 30.

At least a part of the second connecting portion 331 is disposed in the second colloid 42. Specifically, at least a part of the second connecting portion 331 is buried in the second colloid 42. The second colloid 42 wraps the second connecting portion 331, thereby increasing the contact area between the second fixing piece 33 and the second colloid 42, and in turn, improving the connection stability between the bracket 30 and the second colloid 42. The second connecting portion 331 may be partially buried in the second colloid 42, or may be fully buried in the second colloid 42.

In a case that the second connecting portion 331 is at least partially disposed in the second colloid 42, the second constraining portion 332 may be partially buried in the second colloid 42, or may be fully buried in the second colloid 42.

In some embodiments, when viewed along the first direction X, the second fixing piece 33 protrudes beyond the edge of the bracket 30 along the second direction Y. Understandably, when viewed along the first direction X, at least a part of the second fixing piece 33 does not overlap the bracket 30, thereby reducing the risk of interference between the second fixing piece 33 and other structures of the battery module 100.

The junction between the second connecting portion 331 and the bracket 30 may be disposed near the edge of the bracket 30. The junction between the second connecting portion and the bracket 30 is at a distance from the edge of the bracket 30.

In some other embodiments, the second connecting portion 331 is connected to the edge of the bracket 30. When viewed along a direction X' opposite to the first direction X, the junction of the second connecting portion 331 coincides with the edge of the bracket 30.

The bracket 30 may is provided with one second fixing piece 33 or a plurality of second fixing pieces 33. In an embodiment in which the bracket 30 is provided with a plurality of second fixing pieces 33, the plurality of second fixing pieces 33 are disposed at intervals on the bracket 30. The bracket 30 is connected to the second colloid 42 through the plurality of second fixing pieces 33, thereby further improving the stability of the bracket 30. For example, the plurality of second fixing pieces 33 are arranged at intervals along a third direction Z. The first direction X, the second direction Y, and the third direction Z are perpendicular to each other.

Referring to FIG. 13, in some embodiments, when viewed along a direction X' opposite to the first direction X, the projection of the second fixing piece 33 lies within the second space Q2, thereby reducing the risk of interference between the second fixing piece 33 and other structures.

As shown in FIG. 15, in some embodiments, a tab 211 is disposed at one end of the battery cell 21, the end of the battery cell 21being oriented away from the second sidewall 142. A third space Q3 is provided between the cell assembly 20 and the second sidewall 142. The third space Q3, the second space Q2, and the first space Q1 communicate to each other, or are independent of each other.

Still referring to FIG. 15, the battery module 100 further includes a third colloid 43. The third colloid 43 is disposed in the third space Q3. The third colloid 43 connects the cell assembly 20, the second sidewall 142, and the third sidewall 143, and can improve the stability of the cell assembly 20 in the housing 10, thereby improving the stability of the battery module 100 under vibration, impact, or other conditions. The third colloid 43 can further serve a sealing function in the third space Q3, thereby reducing the risk of leakage of the battery module 100.

In some embodiments, the third colloid 43 is configured to be formed by curing a third insulation material disposed in the third space Q3. The third insulation material includes, but is not limited to, a potting glue or styrofoam.

The first insulation material, the second insulation material, and the third insulation material may be the same type of material or different types of materials.

The third colloid 43 may fill the third space Q3 by pouring. A flowable third insulation material is poured from a gap communicating to the third space Q3. The flowable third insulation material can flow into the third space Q3. The third insulation material is cured to form a third colloid 43. The third colloid connects the second sidewall 142, the third sidewall 143, and the cell assembly 20. This makes it convenient for the third colloid 43 to fill the third space Q3 and connect the second sidewall 142, the third sidewall 143, and the cell assembly 20. The flowable third insulation material can flow to the third space Q3, thereby maximally increasing the contact area of the insulation material in contact with the second sidewall 142 and the third sidewall 143 and increasing the contact area of the insulation material in contact with the cell assembly 20, and in turn, increasing the connection area between the third colloid 43 and the second sidewall 142, the connection area between the third colloid 43 and the third sidewall 143, and the connection area between the third colloid 43 and the cell assembly 20, and improving the connection stability between the second sidewall 142 and the cell assembly 20 as well as the connection stability between the third sidewall 143 and the cell assembly 20.

In some embodiments, the flowable third insulation material may be poured into the third space Q3 through the opening 12.

In an embodiment in which the first space Q1, the second space Q2, and the third space Q3 communicate to each other, the insulation material may be poured from the opening 12 at a time. The flowable insulation material can flow to the third space Q3, the second space Q2, and the first space Q1. After the insulation material is cured, the insulation material forms a first colloid 41 in the first space Q1, forms a second colloid 42 in the second space Q2, and forms a third colloid 43 in the third space Q3. The first colloid 41, the second colloid 42, and the third colloid 43 are formed in one piece. The first colloid 41, the second colloid 42, and the third colloid 43 form a one-piece colloid 40 (shown in FIG. 1), thereby simplifying the molding manner of the first colloid 41, the second colloid 42, and the third colloid 43.

In an embodiment in which the first space Q1, the second space Q2, and the third space Q3 are independent of each other without communicating to each other, the insulation material may be poured into the first space Q1, the second space Q2, and the third space Q3 separately, thereby forming independent and discrete first colloid 41, second colloid 42, and third colloid 43 in the first space Q1, the second space Q2, and the third space Q3, respectively.

Referring to FIG. 9, FIG. 18, FIG. 19, and FIG. 20, in some embodiments, the bracket 30 is provided with a third fixing piece 34. The third fixing piece 34 is configured to coordinate with the third colloid 43 to connect the bracket 30 and the third colloid 43. The third fixing piece 34 includes a third connecting portion 341 and a third constraining portion 342. The third connecting portion 341 is connected to the bracket 30. The third constraining portion 342 is disposed in the third colloid 43, and protrudes toward the third sidewall 143 beyond a surface of the third connecting portion 341 along the third direction Z. The third constraining portion 342 is buried in the third colloid 43.

A tab 211 is disposed at one end of the battery cell 21, the end of the battery cell 21being oriented away from the second sidewall 142. Therefore, the dimension of the third space Q3 between the cell assembly 20 and the second sidewall 142 along the second direction Y is relatively small. The second constraining portion 332 of the second fixing piece 33 protrudes toward the third sidewalls 143 beyond the surface of the third connecting portion 341 along the third direction Z. Therefore, the dimension of the third constraining portion along the second direction Y can be set to be relatively small, and the dimension of the third constraining portion along the third direction Z can be set to be relatively large, thereby fully utilizing the space inside the housing 10 in the third direction Z and reducing the space occupation in the second direction Y. The third constraining portion 342 is disposed in the third colloid 43, thereby increasing the connection area between the third constraining portion 342 and the third colloid 43, and further improving the stability of the bracket 30.

A third angle C is provided between the third connecting portion 341 and the third constraining portion 342, satisfying: 0° < C < 180°, so that the third constraining portion 342 is bent relative to the third connecting portion 341. The third constraining portion 342 is disposed in the third colloid 43, so that the bracket 30 can be connected to the third colloid 43 through the third fixing piece 34, thereby improving the connection stability of the bracket 30, and in turn, improving the structural strength of the battery module 100. When the angle C between the third connecting portion 341 and the third constraining portion 342 of the third fixing piece 34 satisfies 0° < C < 180°, in contrast to the scenario in which the angle between the third constraining portion 342 and the third connecting portion 341 is 0° or 180°, this arrangement increases the contact area between the third constraining portion 342 and the third colloid 43, and further improves the stability of the bracket 30.

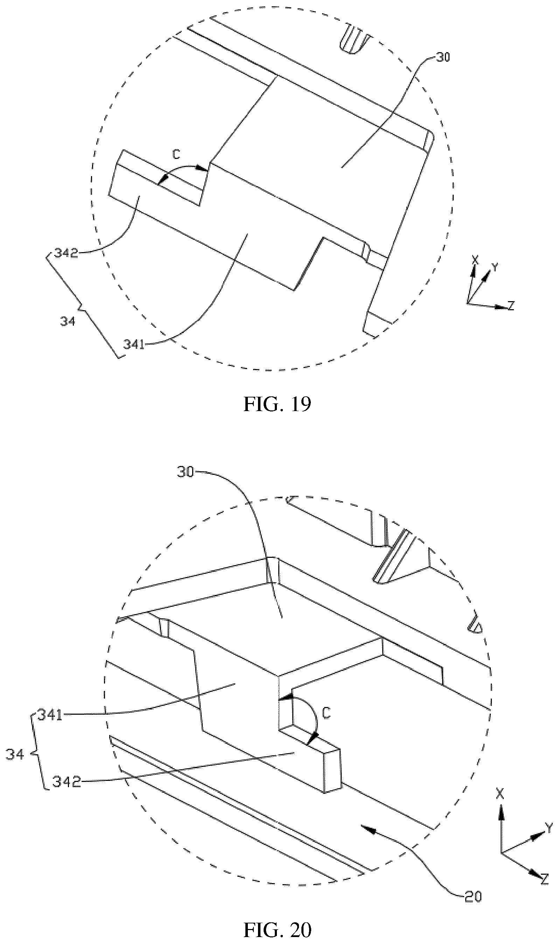

The third connecting portion 341 may be a plate-like structure. The third connecting portion 341 may extend into the third space Q3. In some embodiments, the extension direction of the third connecting portion 341 may be parallel to the first direction X. Alternatively, the extension direction of the third connecting portion 341 may deviate from the first direction X by an angle. For example, the angle by which the extension direction of the third connecting portion 341 deviates from the first direction X is denoted as d, and d may be an acute angle less than 90°. For example, d is 5°, 8°, 10°, 12°, 15°, or the like. FIG. 19 show a scenario in which the extension direction of the third connecting portion 341 is parallel to the first direction X.

The third angle C between the third connecting portion 341 and the third constraining portion 342 may be an acute angle, that is, 0° < C < 90°. Alternatively, the third angle C between the third connecting portion 341 and the third constraining portion 342 may be an obtuse angle, that is, 90° < C < 180°. Alternatively, the third angle C between the third connecting portion 341 and the third constraining portion 342 may be a right angle, that is, C = 90°. As shown in FIG. 19 and FIG. 20, the third constraining portion 342 is a plate-like structure. The third constraining portion 342 extends from the third connecting portion 341 toward the third sidewall 143 along the second direction Y. The third connecting portion 341 extends along the first direction X. The third constraining portion 342 extends along the second direction Y. The third connecting portion 341 is perpendicular to the third constraining portion 342. The third angle C between the third connecting portion 341 and the third constraining portion 342 is equal to 90°.

In some embodiments, the third connecting portion 341 and the third constraining portion 342 are formed in one piece, thereby facilitating the manufacturing and molding of the third fixing piece 34, and increasing the structural strength of the third fixing piece 34.

That the third connecting portion 341 and the third constraining portion 342 are formed in one piece means that the third fixing piece 34 is a one-piece molded structure. The third fixing piece 34 may be formed by a one-piece molding method such as casting, injection molding, or bending. For example, a sheet material structure is divided into two parts. Of the two parts, one part is folded around an axis relative to the other part, so that the angle between the two parts is greater than 0° and less than 180°. The two parts form the third connecting portion 341 and the third constraining portion 342, respectively.

In some other embodiments, the third connecting portion 341 and the third constraining portion 342 may be separately disposed and then connected into one to form the third fixing piece 34. The method of connection between the third connecting portion 341 and the third constraining portion 342 may be a detachable connection, such as bolting or snap connection. In this way, when the third connecting portion 341 or the third constraining portion 342 is partially damaged, it is not necessary to replace the entire third fixing piece 34, thereby reducing cost. The method of connection between the third connecting portion 341 and the third constraining portion 342 may be a fixed connection such as welding, bonding, or bolting, thereby increasing the connection strength between the third connecting portion 341 and the third constraining portion 342.

In some embodiments, the bracket 30 and the third fixing piece 34 may be formed in one piece, thereby facilitating manufacturing and molding, and increasing the structural strength of the entirety of the third fixing piece 34 and the bracket 30. For example, the bracket 30 and the third fixing piece 34 are formed by a one-piece molding method such as casting, injection molding, or bending.

In some other embodiments, the bracket 30 and the third fixing piece 34 may be separately disposed and then connected into one. The method of connection between the bracket 30 and the third fixing piece 34 may be a detachable connection, such as bolting or snap connection. In this way, when the third fixing piece 34 or the bracket 30 is partially damaged, it is not necessary to replace the entirety of the bracket 30 and the third fixing piece 34, thereby reducing cost. The method of connection between the bracket 30 and the third fixing piece 34 may be a fixed connection such as welding, bonding, or bolting, thereby increasing the connection strength between the third fixing piece 34 and the bracket 30. In this embodiment in which the third fixing piece 34 and the bracket 30 are separately disposed and then connected into a whole, the third fixing piece 34 and the bracket 30 may be made of the same material or different materials.

The third constraining portion 342 is disposed in the third colloid 43. Specifically, the third constraining portion 342 is buried in the third colloid 43. Along the first direction X, the third colloid 43 is disposed on both sides of the third constraining portion 342. The third colloid 43 wraps the third constraining portion 342, thereby increasing the contact area between the third constraining portion 342 and the third colloid 43, and in turn, improving the connection stability between the bracket 30 and the third colloid 43. Along the extension direction of the third constraining portion 342, the third constraining portion 342 may be partially buried in the third colloid 43, or may be fully buried in the third colloid 43.

In some embodiments, at least a part of the third connecting portion 341 is disposed in the third colloid 43. Therefore, at least a part of the third constraining portion 342 and at least a part of the third connecting portion 341 are both disposed in the third colloid 43, thereby further increasing the connection area of the third fixing piece 34, and further improving the connection stability of the bracket 30.

At least a part of the third connecting portion 341 is disposed in the third colloid 43. Specifically, at least a part of the third connecting portion 341 is buried in the third colloid 43. The third colloid 43 wraps the third connecting portion 341, thereby increasing the contact area between the third fixing piece 34 and the third colloid 43, and in turn, improving the connection stability between the bracket 30 and the third colloid 43. The third connecting portion 341 may be partially buried in the third colloid 43, or may be fully buried in the third colloid 43.

In a case that the third connecting portion 341 is at least partially disposed in the third colloid 43, the third constraining portion 342 may be partially buried in the third colloid 43, or may be fully buried in the third colloid 43.

The bracket 30 may is provided with one third fixing piece 34 or a plurality of third fixing pieces 34. In an embodiment in which the bracket 30 is provided with a plurality of third fixing pieces 34, the plurality of third fixing pieces 34 are disposed at intervals on the bracket 30. The bracket 30 is connected to the third colloid 43 through the plurality of third fixing pieces 34, thereby further improving the stability of the bracket 30. For example, the plurality of third fixing pieces 34 are arranged at intervals along a third direction Z. As an example, two third fixing pieces 34 are disposed on the bracket 30. The two third fixing pieces 34 are arranged at intervals along the third direction Z. The third constraining portions 342 of the two third fixing pieces 34 may extend toward the same third sidewall 143. Alternatively, the third constraining portions 342 of the two third fixing pieces 34 may extend toward different third sidewalls 143.

In some embodiments, as shown in FIG. 9, the third constraining portions 342 of the two third fixing pieces 34 extend toward each other, that is, extend toward different third sidewalls 143. The third constraining portions 342 of the two third fixing pieces 34 are both disposed in the third colloid 43, thereby further improving the stability of the bracket 30. The third constraining portions 342 of the two third fixing pieces 34 extend toward each other, thereby facilitating the arrangement of the two third fixing pieces 34 and fully utilizing the space in the housing 10.

In some embodiments, when viewed along a direction X' opposite to the first direction X, the projection of the third fixing piece 34 lies within the third space Q3, thereby reducing the risk of interference between the third fixing piece 34 and other structures.

In some embodiments, along the third direction Z, the two third sidewalls 143 combine with two sides of the cell assembly 20, respectively, to form fourth spaces Q4 (shown in FIG. 6). The battery module 100 further includes a fourth colloid 44. The fourth colloid 44 is disposed in each of the fourth spaces. The fourth colloid 44 connects the third sidewall 143 and the cell assembly 20.

The fourth space, the third space Q3, the second space Q2, and the first space Q1 communicate to each other, or are independent of each other.

In some embodiments, the fourth colloid 44 is configured to be formed by curing a fourth insulation material disposed in the fourth space Q4. The fourth insulation material includes, but is not limited to, a potting glue or styrofoam.

The fourth colloid 44 may fill the fourth space Q4 by pouring. A flowable fourth insulation material is poured from a gap communicating to the fourth space Q4. The flowable fourth insulation material can flow into the fourth space Q4. The fourth insulation material is cured to form a fourth colloid 44. The fourth colloid connects the third sidewall 143 and the cell assembly 20. This makes it convenient for the fourth colloid 44 to fill the fourth space Q4 and connect the third sidewall 143 and the cell assembly 20, and the flowable fourth insulation material can flow into the fourth space Q4, thereby maximally increasing the contact area between the fourth colloid and the third sidewall 143 and increasing the contact area between the fourth colloid and the cell assembly 20, and in turn, increasing the connection area between the fourth colloid 44 and the third sidewall 143 as well as the connection area between the fourth colloid 44 and the cell assembly 20, and improving the connection stability between the third sidewall 143 and the cell assembly 20.

In some embodiments, the flowable fourth insulation material may be poured into the fourth space Q4 through the opening 12.

The first insulation material, the second insulation material, the third insulation material, and the fourth insulation material may be the same type of material or different types of materials.

In an embodiment in which the first space Q1, the second space Q2, the third space Q3, and the fourth space Q4 communicate to each other, the insulation material may be poured from the opening 12. The flowable insulation material can flow to the fourth space, the third space Q3, the second space Q2, and the first space Q1 until the insulation material fills the first space Q1, the second space Q2, the third space Q3, and the fourth space. After the insulation material is cured, the insulation material forms a first colloid 41 in the first space Q1, forms a second colloid 42 in the second space Q2, forms a third colloid 43 in the third space Q3, and forms a fourth colloid 44 in the fourth space. The first colloid 41, the second colloid 42, the third colloid 43, and the fourth colloid 44 are formed in one piece. In other words, the colloid 40 is a one-piece molded structure. The first colloid 41, the second colloid 42, the third colloid 43, and the fourth colloid 44 form a one-piece colloid 40 (shown in FIG. 1), thereby simplifying the molding manner of the first colloid 41, the second colloid 42, the third colloid 43, and the fourth colloid 44.

In an embodiment in which the first space Q1, the second space Q2, the third space Q3, and the fourth space Q4 are independent of each other without communicating to each other, the insulation material may be poured into the first space Q1, the second space Q2, the third space Q3, and the fourth space Q4 separately, thereby forming independent and discrete first colloid 41, second colloid 42, third colloid 43, and fourth colloid 44 in the first space Q1, the second space Q2, the third space Q3, and the fourth space Q4, respectively.

In some embodiments, an end face of the housing 10 where the opening 12 is located is a first end face 144. A first groove 145 (shown in FIG. 2) is provided on the first end face 144. The bracket 30 includes a mating portion 35 (shown in FIG. 1). The mating portion 35 is accommodated in the first groove 145.

The first groove 145 is recessed from the first end face 144 toward the bottom wall 13 along the first direction X. Understandably, the first end face 144 is an end face of the sidewall 14, where the end face of the sidewall 14 being oriented away from the bottom wall 13 along the first direction X. The first groove 145 is recessed toward the bottom wall 13 from the end face of the sidewall 14, where the end face of the sidewall 14 being oriented away from the bottom wall 13.

In some embodiments, the first groove 145 further extends to the inner surface of the sidewall 14. The inner surface of the sidewall 14 is a surface, oriented toward the cell assembly 20, of the sidewall 14.

In some embodiments, the mating portion 35 may be a bulge that protrudes toward the cell assembly 20 beyond the bracket 30, for example, may be a positioning pin. The bulge and the bracket 30 may be formed in one piece for ease of manufacturing. Alternatively, the bulge and the bracket 30 may be separately disposed and then connected into a whole. For example, the bulge is detachably connected to the bracket 30, for example, by bolting or snap connection, thereby facilitating the maintenance and replacement of the bulge and the bracket 30. The fixed connection, such as welding and bonding, between the bulge and the bracket 30 can improve the connection strength between the bulge and the bracket 30.

Alternatively, the mating portion 35 may be a part of the bracket 30. For example, the bracket 30 is a plate-shaped structure. The edge of the bracket 30 is accommodated in the first groove 145.

The first groove 145 coordinates with the mating portion 35 to not only improve the mounting stability of the bracket 30, but also enable the housing 10 to bear the weight of the bracket 30, thereby reducing the risk of the bracket 30 squeezing the cell assembly 20.

In some embodiments, the battery pack 1000 further includes a cover 300. The cover 300 covers the opening 12. The second circuit board 200 is disposed between the bracket 30 and the cover 300 along the first direction X. The cover 300 may be detachably connected to the housing 10, for example, by bolting. The cover 300 may be fixedly connected to the housing 10, for example, by welding or bonding. Further, a sealing element may be disposed between the cover 300 and the housing 10 to improve the sealing performance of the battery pack 1000, thereby improving the safety performance of the battery pack 1000.

An embodiment of this application further provides a battery pack 1000. The battery pack 1000 includes the battery module 100 disclosed in any one of the above embodiments and a second circuit board 200. The second circuit board 200 is disposed on one side of the bracket 30, the side being of the bracket 30 being facing away from the cell assembly 20.

The battery pack 1000 includes the battery module 100 disclosed in any one of the above embodiments, the stability of the bracket 30 of the battery module 100 according to any one of the above embodiments is relatively high, and the structural strength of the battery module 100 is relatively high. Therefore, the structural strength of the battery pack 1000 containing the battery module 100 is relatively high. The second circuit board 200 is disposed on one side, away from the cell assembly 20, of the bracket 30, thereby improving the mounting stability of the second circuit board 200.

An embodiment of this application further provides an electrical device. The electrical device includes the battery pack 1000 disclosed in the above embodiment. The battery pack 1000 is configured to provide electrical energy for the electrical device in use.

The battery pack 1000 disclosed in the above embodiment is of relatively high structural strength, thereby improving the electrical safety of the electrical device powered by the battery pack 1000 and improving the electrical stability of the electrical device.

## Claims

1. A battery module (100), comprising:
a housing (10) comprising an accommodation space (11), the accommodation space (11) comprises an opening (12) at one end of the accommodation space (11), the opening extends along a first direction (X), the housing (10) comprises a bottom wall (13), and the bottom wall (13) is disposed opposite to the opening (12);
a cell assembly (20) disposed in the accommodation space (11);
a bracket (30) disposed on one side of the cell assembly (20), the one side of the cell assembly (20) being oriented away from the bottom wall (13), the cell assembly disposed between the bracket (30) and the bottom wall (13); a first space (Q1) is provided between the bracket (30) and the cell assembly (20);
a first colloid (41) disposed in the first space (Q1), the first colloid (41) connects the cell assembly (20) and the bracket (30),
the bracket (30) is provided with a first fixing piece (31), the first fixing piece (31) comprises a first connecting portion (311) and a first constraining portion (312), the first constraining portion (312) is disposed in the first colloid (41), and a first angle A is provided between the first connecting portion (311) and the first constraining portion (312), wherein 0° < A < 180°.

2. The battery module (100) according to claim 1, wherein the first angle is an obtuse angle, and the first angle is facing away from the cell assembly (20).

3. The battery module (100) according to claim 1 or 2, wherein 135° ≤ A ≤ 160°.

4. The battery module (100) according to any one of claims 1 to 3, wherein at least a part of the first connecting portion (311) is disposed in the first colloid (41).

5. The battery module (100) according to claim 4, wherein the first connecting portion (311) extends in a direction at an acute angle a with respect to the first direction (X).

6. The battery module (100) according to any one of claims 1 to 5, wherein the bracket (30) comprises a base portion (36) and an extension portion (32), the extension portion (32) extends from the base portion (36) toward the cell assembly (20), the extension portion (32) comprises a first part (322) and two notches (321), and the first part (322) is located between the two notches (321);
the first connecting portion (311) is connected to the first part (322).

7. The battery module (100) according to any one of claims 1 to 6, wherein, when viewed along the first direction (X), the first fixing piece (31) protrudes beyond an edge of the bracket (30).

8. The battery module (100) according to any one of claims 1 to 7, wherein, when viewed along the first direction (X), the first fixing piece (31) overlaps the cell assembly (20).

9. The battery module (100) according to any one of claims 1 to 8, wherein the housing (10) comprises a first sidewall (141), and one end of the first sidewall (141) is connected to the bottom wall (13);
the cell assembly (20) comprises a battery cell (21); along a second direction (Y), a tab (211) is disposed at one end of the battery cell (21), the end of the battery cell being oriented toward the first sidewall (141), and a second space (Q2) is provided between the cell assembly (20) and the first sidewall (141);
the battery module (100) further comprises a second colloid (42), the second colloid (42) is disposed in the second space (Q2), and the second colloid (42) connects the cell assembly (20) and the first sidewall (141); and
the bracket (30) is provided with a second fixing piece (33), the second fixing piece (33) comprises a second connecting portion (331) and a second constraining portion (332), the second connecting portion (331) is connected to the bracket (30), the second constraining portion (332) is disposed in the second colloid (42);
along the second direction (Y), the second constraining portion (332) is disposed toward the first sidewall (141), and the second constraining portion (332) protrudes beyond the second connecting portion (331).

10. The battery module (100) according to claim 9, wherein, when viewed along a direction opposite to the first direction (X), a projection of the second fixing piece (33) lies within the second space (Q2).

11. The battery module (100) according to claim 9, wherein the housing (10) comprises a second sidewall (142) and two third sidewalls (143), the two third sidewalls (143) are disposed opposite to each other along a third direction (Z); the first direction (X), the second direction (Y), and the third direction (Z) are perpendicular to each other;
the bracket (30) is provided with three first fixing pieces (31), one first fixing piece (31) and the second fixing piece (33) are disposed at two opposite sides of the bracket (30) along the second direction (y), and the other two first fixing pieces (30) are disposed at two opposite sides of the bracket (30) along the third direction (Z).

12. The battery module (100) according to any one of claims 1 to 11, wherein an end face of the housing where the opening (12) is located is a first end face (144), a first groove (145) is provided on the first end face (144), the bracket (30) comprises a mating portion (35), and the mating portion (35) is accommodated in the first groove (145).

13. The battery module (100) according to any one of claims 1 to 12, wherein the first colloid (41) is formed by curing a first insulation material disposed in the first space (Q1).

14. A battery pack (1000), wherein the battery pack (1000) comprises:
the battery module (100) according to any one of claims 1 to 13; and
a circuit board (200), disposed on one side of the bracket (30), the one side of the bracket being facing away from the cell assembly (20).

15. An electrical device, wherein the electrical device comprises the battery pack (1000) according to claim 14.

## Patentansprüche

1. Batteriemodul (100), umfassend:
ein Gehäuse (10), das einen Aufnahmeraum (11) umfasst, der Aufnahmeraum (11) eine Öffnung (12) an einem Ende des Aufnahmeraums (11) umfasst, sich die Öffnung entlang einer ersten Richtung (X) erstreckt, das Gehäuse (10) eine Bodenwand (13) umfasst, und die Bodenwand (13) gegenüber der Öffnung (12) angeordnet ist;
eine Zellanordnung (20), die in dem Aufnahmeraum (11) angeordnet ist;
eine Halterung (30), die auf einer Seite der Zellanordnung (20) angeordnet ist, wobei die eine Seite der Zellanordnung (20) von der Bodenwand (13) weg ausgerichtet ist, die Zellanordnung zwischen der Halterung (30) und der Bodenwand (13) angeordnet ist; ein erster Raum (Q1) zwischen der Halterung (30) und der Zellanordnung (20) bereitgestellt ist;
ein erstes Kolloid (41), das in dem ersten Raum (Q1) angeordnet ist, wobei das erste Kolloid (41) die Zellanordnung (20) und die Halterung (30) verbindet,
die Halterung (30) mit einem ersten Befestigungsstück (31) bereitgestellt ist, das erste Befestigungsstück (31) einen ersten Verbindungsabschnitt (311) und einen ersten Begrenzungsabschnitt (312) umfasst, der erste Begrenzungsabschnitt (312) in dem ersten Kolloid (41) angeordnet ist und ein erster Winkel A zwischen dem ersten Verbindungsabschnitt (311) und dem ersten Begrenzungsabschnitt (312) bereitgestellt ist, wobei 0° < A < 180°.

2. Batteriemodul (100) nach Anspruch 1, wobei der erste Winkel ein stumpfer Winkel ist und der erste Winkel von der Zellanordnung (20) weg ausgerichtet ist.

3. Batteriemodul (100) nach Anspruch 1 oder 2, wobei 135° ≤ A ≤ 160°.

4. Batteriemodul (100) nach einem der Ansprüche 1 bis 3, wobei mindestens ein Teil des ersten Verbindungsabschnitts (311) in dem ersten Kolloid (41) angeordnet ist.

5. Batteriemodul (100) nach Anspruch 4, wobei sich der erste Verbindungsabschnitt (311) in einer Richtung in einem spitzen Winkel a in Bezug auf die erste Richtung erstreckt (X).

6. Batteriemodul (100) nach einem der Ansprüche 1 bis 5, wobei die Halterung (30) einen Basisabschnitt (36) und einen Erstreckungsabschnitt (32) umfasst, sich der Erstreckungsabschnitt (32) von dem Basisabschnitt (36) in Richtung der Zellanordnung (20) erstreckt, der Erstreckungsabschnitt (32) einen ersten Teil (322) und zwei Kerben (321) umfasst und sich der erste Teil (322) zwischen den beiden Kerben (321) befindet;
der erste Verbindungsabschnitt (311) mit dem ersten Teil (322) verbunden ist.

7. Batteriemodul (100) nach einem der Ansprüche 1 bis 6, wobei das erste Befestigungsstück (31) entlang der ersten Richtung (X) betrachtet, über eine Kante der Halterung (30) hinaus hervorsteht.

8. Batteriemodul (100) nach einem der Ansprüche 1 bis 7, wobei das erste Befestigungsstück (31) entlang der ersten Richtung betrachtet (X), die Zellanordnung (20) überlappt.

9. Batteriemodul (100) nach einem der Ansprüche 1 bis 8, wobei das Gehäuse (10) eine erste Seitenwand (141) umfasst, und ein Ende der ersten Seitenwand (141) mit der Bodenwand (13 verbunden ist;
die Zellanordnung (20) eine Batteriezelle (21) umfasst; entlang einer zweiten Richtung (Y) eine Lasche (211) an einem Ende der Batteriezelle (21) angeordnet ist, wobei das Ende der Batteriezelle in Richtung der ersten Seitenwand (141) ausgerichtet ist, und ein zweiter Raum (Q2) zwischen der Zellanordnung (20) und der ersten Seitenwand (141) bereitgestellt ist;
das Batteriemodul (100) weiter ein zweites Kolloid (42) umfasst, das zweite Kolloid (42) in dem zweiten Raum (Q2) angeordnet ist und das zweite Kolloid (42) die Zellanordnung (20) und die erste Seitenwand (141) verbindet; und
die Halterung (30) mit einem zweiten Befestigungsstück (33) bereitgestellt ist, das zweite Befestigungsstück (33) einen zweiten Verbindungsabschnitt (331) und einen zweiten Begrenzungsabschnitt (332) umfasst, der zweite Verbindungsabschnitt (331) mit der Halterung (30) verbunden ist, der zweite Begrenzungsabschnitt (332) in dem zweiten Kolloid (42) angeordnet ist;
entlang der zweiten Richtung (Y) der zweite Begrenzungsabschnitt (332) in Richtung der ersten Seitenwand (141) angeordnet ist, und der zweite Begrenzungsabschnitt (332) über den zweiten Verbindungsabschnitt (331) hervorsteht.

10. Batteriemodul (100) nach Anspruch 9, wobei ein Vorsprung des zweiten Befestigungsstücks (33) entlang einer Richtung entgegengesetzt zu der ersten Richtung (X) betrachtet, innerhalb des zweiten Raums (Q2) liegt.

11. Batteriemodul (100) nach Anspruch 9, wobei das Gehäuse (10) eine zweite Seitenwand (142) und zwei dritte Seitenwände (143) umfasst, wobei die beiden dritten Seitenwände (143) einander entlang einer dritten Richtung (Z) gegenüberliegend angeordnet sind; wobei die erste Richtung (X), die zweite Richtung (Y) und die dritte Richtung (Z) senkrecht zueinander sind;
die Halterung (30) mit drei ersten Befestigungsteilen (31) bereitgestellt ist, ein erstes Befestigungsteil (31) und das zweite Befestigungsteil (33) an zwei gegenüberliegenden Seiten der Halterung (30) entlang der zweiten Richtung (y) angeordnet sind, und die anderen beiden ersten Befestigungsteile (30) an zwei gegenüberliegenden Seiten der Halterung (30) entlang der dritten Richtung (Z) angeordnet sind.

12. Batteriemodul (100) nach einem der Ansprüche 1 bis 11, wobei eine Stirnseite des Gehäuses, an der sich die Öffnung (12) befindet, eine erste Stirnseite (144) ist, eine erste Nut (145) an der ersten Stirnseite (144) bereitgestellt ist, die Halterung (30) einen Gegenabschnitt (35) umfasst und der Gegenabschnitt (35) in der ersten Nut (145) aufgenommen ist.

13. Batteriemodul (100) nach einem der Ansprüche 1 bis 12, wobei das erste Kolloid (41) durch Aushärten eines ersten Isolationsmaterials gebildet wird, das in dem ersten Raum (Q1) angeordnet ist.

14. Batteriepack (1000), wobei das Batteriepack (1000) umfasst:
das Batteriemodul (100) nach einem der Ansprüche 1 bis 13; und
eine Leiterplatte (200), die auf einer Seite der Halterung (30) angeordnet ist, wobei die eine Seite der Halterung von der Zellanordnung (20) abgewandt ist.

15. Elektrische Vorrichtung, wobei die elektrische Vorrichtung den Batteriepack (1000) nach Anspruch 14 umfasst.

## Revendications

1. Un module de batterie (100), comprenant :
un boîtier (10) comportant un espace d'accommodation (11), l'espace d'accommodation (11) comprend une ouverture (12) à une extrémité de l'espace d'accommodation (11), l'ouverture s'étend selon une première direction (X), le boîtier (10) comprend une paroi inférieure (13), et la paroi inférieure (13) est disposée opposée à l'ouverture (12) ;
un ensemble de cellules (20) disposé dans l'espace d'accommodation (11) ;
une équerre (30) disposée sur un côté de l'ensemble de cellules (20), le côté de l'ensemble de cellules (20) étant orienté loin de la paroi inférieure (13), l'ensemble de cellules étant disposé entre l'équerre (30) et la paroi inférieure (13) ; un premier espace (Q1) est prévu entre l'équerre (30) et l'ensemble de cellules (20) ;
un premier colloïde (41) disposé dans le premier espace (Q1), le premier colloïde (41) connecte l'ensemble de cellules (20) et l'équerre (30),
l'équerre (30) est pourvue d'une première pièce de fixation (31), la première pièce de fixation (31) comprend une première portion de connexion (311) et une première portion de contrainte (312), la première portion de contrainte (312) est disposée dans le premier colloïde (41), et un premier angle A est prévu entre la première portion de connexion (311) et la première portion de contrainte (312), dans lequel 0° < A < 180°.

2. Le module de batterie (100) selon la revendication 1, dans lequel le premier angle est un angle obtus, et le premier angle fait face loin de l'ensemble de cellules (20).

3. Le module de batterie (100) selon la revendication 1 ou 2, dans lequel 135° ≤ A ≤ 160°.

4. Le module de batterie (100) selon l'une quelconque des revendications 1 à 3, dans lequel au moins une partie de la première portion de connexion (311) est disposée dans le premier colloïde (41).

5. Le module de batterie (100) selon la revendication 4, dans lequel la première portion de connexion (311) s'étend dans une direction à un angle aigu a par rapport à la première direction (X).

6. Le module de batterie (100) selon l'une quelconque des revendications 1 à 5, dans lequel l'équerre (30) comprend une portion de base (36) et une portion d'extension (32), la portion d'extension (32) s'étend depuis la portion de base (36) vers l'ensemble de cellules (20), la portion d'extension (32) comprend une première partie (322) et deux encoches (321), et la première partie (322) est située entre les deux encoches (321) ;
la première portion de connexion (311) est reliée à la première partie (322).

7. Le module de batterie (100) selon l'une quelconque des revendications 1 à 6, dans lequel, lorsqu'on regarde selon la première direction (X), la première pièce de fixation (31) dépasse d'un bord de l'équerre (30).

8. Le module de batterie (100) selon l'une quelconque des revendications 1 à 7, dans lequel, lorsqu'on regarde selon la première direction (X), la première pièce de fixation (31) chevauche l'ensemble de cellules (20).

9. Le module de batterie (100) selon l'une quelconque des revendications 1 à 8, dans lequel le boîtier (10) comprend une première paroi latérale (141), et une extrémité de la première paroi latérale (141) est reliée à la paroi inférieure (13) ;
l'ensemble de cellules (20) comprend une cellule de batterie (21) ; le long d'une seconde direction (Y), une languette (211) est disposée à une extrémité de la cellule de batterie (21), l'extrémité de la cellule de batterie étant orientée vers la première paroi latérale (141), et un second espace (Q2) est prévu entre l'ensemble de cellules (20) et la première paroi latérale (141) ;
le module de batterie (100) comprend en outre un second colloïde (42), le second colloïde (42) est disposé dans le second espace (Q2), et le second colloïde (42) connecte l'ensemble de cellules (20) et la première paroi latérale (141) ; et
l'équerre (30) est pourvue d'une seconde pièce de fixation (33), la seconde pièce de fixation (33) comprend une seconde portion de connexion (331) et une seconde portion de contrainte (332), la seconde portion de connexion (331) est reliée à l'équerre (30), la seconde portion de contrainte (332) est disposée dans le second colloïde (42) ;
le long de la seconde direction (Y), la seconde portion de contrainte (332) est disposée vers la première paroi latérale (141), et la seconde portion de contrainte (332) dépasse la seconde portion de connexion (331).

10. Le module de batterie (100) selon la revendication 9, dans lequel, lorsqu'on regarde selon une direction opposée à la première direction (X), une projection de la seconde pièce de fixation (33) se situe à l'intérieur du second espace (Q2).

11. Le module de batterie (100) selon la revendication 9, dans lequel le boîtier (10) comprend une seconde paroi latérale (142) et deux troisièmes parois latérales (143), les deux troisièmes parois latérales (143) sont disposées opposées l'une à l'autre le long d'une troisième direction (Z) ; la première direction (X), la seconde direction (Y), et la troisième direction (Z) sont perpendiculaires les unes aux autres ;
l'équerre (30) est pourvue de trois premières pièces de fixation (31), une première pièce de fixation (31) et la seconde pièce de fixation (33) sont disposées sur deux côtés opposés de l'équerre (30) le long de la seconde direction (y), et les deux autres premières pièces de fixation (30) sont disposées sur deux côtés opposés de l'équerre (30) le long de la troisième direction (Z).

12. Le module de batterie (100) selon l'une quelconque des revendications 1 à 11, dans lequel une surface terminale du boîtier où se trouve l'ouverture (12) est une première surface terminale (144), une première rainure (145) est prévue sur la première surface terminale (144), l'équerre (30) comprend une portion d'accouplement (35), et la portion d'accouplement (35) est accommodée dans la première rainure (145).

13. Le module de batterie (100) selon l'une quelconque des revendications 1 à 12, dans lequel le premier colloïde (41) est formé par durcissement d'un premier matériau isolant disposé dans le premier espace (Q1).

14. Une batterie (1000), dans laquelle la batterie (1000) comprend :
le module de batterie (100) selon l'une quelconque des revendications 1 à 13 ; et
un circuit imprimé (200), disposé sur un côté de l'équerre (30), le côté de l'équerre étant face éloignée de l'ensemble de cellules (20).

15. Un dispositif électrique, dans lequel le dispositif électrique comprend la batterie (1000) selon la revendication 14.
